# EUROPÄISCHE PATENTSCHRIFT

(11) **EP 3 390 553 B1**
(45) Veröffentlichungstag und Bekanntmachung des Hinweises auf die Patenterteilung: **20.11.2019**
(21) Anmeldenummer: 16804734.8
(22) Anmeldetag: 24.11.2016
(51) Int. Cl.: C09J 5/00, C09J 5/04

(54) **REAKTIVES 2-KOMPONENTENKLEBESYSTEM IN FILMFORM UND VERFAHREN ZU VERKLEBUNG**
REACTIVE TWO-COMPONENT ADHESIVE SYSTEM IN FILM FORM AND ADHERING PROCESS
SYSTÈME ADHÉSIF À DEUX COMPOSANTS RÉACTIFS SOUS FORME DE FILM ET PROCÉDÉ DE COLLAGE

(30) Priorität: 18.12.2015 DE 102015225854
(43) Veröffentlichungstag der Anmeldung: 24.10.2018
(73) Patentinhaber: tesa SE, 22848 Norderstedt (DE)
(72) Erfinder: DIETZE, Sebastian, 22307 Hamburg (DE); KOOPS, Arne, 23881 Neu-Lankau (DE); MAATZ, Gero, 40597 Düsseldorf (DE); SCHÜMANN, Uwe, 25421 Pinneberg (DE)
(86) Internationale Anmeldenummer: PCT/EP2016/078743
(87) Internationale Veröffentlichungsnummer: WO 2017/102282

(56) Entgegenhaltungen:
- EP-A1- 0 300 847
- WO-A1-2014/202402

## Beschreibung

### Technisches Gebiet der Erfindung

Die vorliegende Erfindung betrifft ein Verfahren zur Verklebung von diversen Materialien, wie z.B. Metall, Holz, Glas und/oder Kunststoff unter Einsatz eines Zweikomponenten-Klebesystem in Filmform. Dieses Zweikomponenten-Klebesystem umfasst zwei reaktive Klebstofffilme, die ihrerseits jeweils eine Reaktivkomponente umfassen, wobei die Verklebung durch eine Reaktion bewirkt wird, die die Anwesenheit beider Reaktivkomponenten erfordert. Die Erfindung betrifft weiterhin ein solches Zweikomponenten-Klebesystem selbst.

### Allgemeiner Stand der Technik

Zweikomponenten-Klebesysteme sind allgemein seit Jahren bekannt und in der Fachliteratur eingehend beschrieben. In diesen Systemen wird ein aus zwei Komponenten bestehendes Klebstoff-System auf die zu verklebenden Teile aufgetragen, wobei üblicherweise zwei flüssige Komponenten zum Einsatz kommen. Beispielsweise besteht bei chemisch reagierenden 2-Komponenten-Polymerisationsklebesystemen die eine Komponente aus dem zu polymerisierenden Monomer und einem Aktivator und die andere Komponente aus einer radikalbildenden Substanz (auch Härter oder Initiator genannt) und dem zu polymerisierenden Monomer. Nach Durchmischen oder zumindest Kontaktieren der beiden Komponenten und einer Aktivierung, die meist thermisch erfolgt, wird die radikalbildende Substanz durch den Aktivator in zwei Radikale aufgespalten und die Polymerisationsreaktion der zu polymerisierenden Monomere beginnt. Die Radikalkettenpolymerisation des Monomers findet anschließend bis zu einem Kettenabbruch statt und die Klebemasse härtet aus, wodurch eine dauerhafte Verklebung der zu verklebenden Teile erreicht wird.

Nachteil derartiger flüssiger 2-Komponenten-Polymerisations-Klebesysteme ist, dass ihre Anwendung oft unsauber erfolgt, da die beiden Komponenten meist flüssig bis pastös auf die zu verklebenden Teile aufgetragen werden müssen. Dies ist vor allem bei großflächigen Verklebungen und/oder bei solchen Anwendungen problematisch, bei denen die Oberflächen uneben, z.B. geneigt, sind. Außerdem erfolgt die Aktivierung des Klebstoffsystems in der Regel bei erhöhten Temperaturen, was für empfindliche Substrate problematisch sein kann. Ein weiterer Nachteil derartiger Systeme ist, dass die Lagerstabilität der beiden Komponenten kritisch sein kann. Darüber hinaus gehen herkömmliche 2-Komponenten-Polymerisations-Klebesysteme nach vollständigem Aushärten häufig mit Problemen einher, die erst bei Erschütterungen sichtbar werden. So kann es bei den Systemen des Standes der Technik im Bereich der Verklebungen durch starke Erschütterungen zu Rissen oder Brüchen kommen.

Die EP 300 847 A bietet ein Zweikomponenten-Klebesystem in Folienform an. Dabei werden wiederum zwei Komponenten vorgelegt, die bei Kontakt miteinander zur Reaktion gebracht werden können, wobei ein vernetztes Polymer mit haftklebrigen Eigenschaften gebildet wird. Zumindest eine der Komponenten wird in Form einer Folie vorgelegt. Ähnliche Konzepte schlagen die Schriften DE 10 2013 222 739 A (sowie WO 2014202402 A derselben Patentfamilie) und DE 10 2013 222 278 A vor. Erstere beschreibt ein Reaktives Klebstofffilm-System, umfassend zwei reaktive Klebstofffilme (hier A und B genannt), wobei der erste reaktive Klebstofffilm A neben einer polymeren Filmbildner-Matrix einen Radikalinitiator enthält und der zweite reaktive Klebstofffilm B neben einer polymeren Filmbildner-Matrix einen Aktivator enthält. In der zweiten genannten DE-Schrift wird als Aktivator ein Mangan(II)-, Eisen(II)- oder Kobalt(II)-Komplex eingesetzt, der Porphyrin, Porphyrazin, Phthalocyanin oder Derivate hiervon als Liganden enthält.

Die vorgenannten Systeme haben alle den Nachteil, dass sie immer in Form zweier Komponenten angeboten und eingesetzt werden müssen. Entweder trägt man zwei Flüssigkeiten auf, oder man fixiert einen Film und trägt zur Verklebung eine Flüssigkeit auf, oder man verklebt zwei Filme auf den zwei zu verklebenden Substraten und bringt diese dann im Augenblick des Verklebens zusammen. In jedem Fall hat man aber zwei voneinander getrennte Komponenten, die erst im Moment des Verklebens zusammengebracht werden dürfen.

Die Zusammenführung der zwei Komponenten erfolgt somit erst kurz vor der Anwendung beim Anwender selbst. Dabei sind aufwändige Laminierprozesse erforderlich, bei denen es auf Passgenauigkeit ankommt. Insbesondere für Mehrschicht-Systeme (mehr als zwei Komponente, etwa Schichtaufbauten der Art A-B-A oder noch vielschichtiger), die zu höheren Schichtdicken führen, stellen den Anwender vor hohe Anforderungen.

Auf dem Markt sind eine Vielzahl von Klebebändern bekannt, die einteilig aufgebaut sind Solche einteiligen Klebebänder sind insbesondere ein-oder mehrschichtig aufgebaut und können einseitig oder beidseitig klebend sein. In der Regel werden sie wie angeboten - gegebenenfalls nach Entfernung von Schutz- oder Abdeckschichten - eingesetzt und angewandt. Einteilig aufgebaute Klebebänder werden hauptsächlich in Form von Selbstklebebändern oder in Form zunächst nicht oder wenig klebender, aber aktivierbarer Klebebänder angeboten, wobei letztere beispielsweise chemisch und/oder durch physikalische Behandlung in ihre klebende Form überführt werden oder durch entsprechende Behandlung die finale Klebkraft hervorgerufen wird.
Der Vorteil von Zweikomponenten-Systemen gegenüber den einteiligen Klebebänder ist, dass die einzelnen Komponenten zunächst unabhängig voneinander gelagert und appliziert werden können. Erst nach Zusammenbringung der Komponenten kommt es zur Verklebung. Dem gegenüber steht jedoch die in der Regel unbequemere Handhabbarkeit, wie oben bereits näher geschildert.
Aktivierbare einteilige Klebebänder können auch zur Ausbildung hoher Verklebungsfestigkeiten führen, erfordern aber bereits von Vornherein alle zur Verklebung erforderlichen Bestandteile in einer Schicht (Einkomponenten-Systeme). Hierdurch ist man auf geeignete chemische Zusammensetzungen / Abmischungen beschränkt, während der Einsatz von Zwei-Komponenten-Systemen häufig nur der Zusammenführung der Komponenten bedarf, um die Verklebung zu bewirken. Da die Aktivierung in der Regel nach der Applikation der aktivierbaren Klebebänder im Verbund mit den Substraten erfolgt, ist der Einsatz dieser Systeme in Verbindung mit sehr empfindlichen Substraten häufig nicht geeignet, so dass man dort auf Selbstklebesysteme angewiesen ist.

### Aufgabe der vorliegenden Erfindung

Der vorliegenden Erfindung liegt daher die Aufgabe zugrunde, ein Verfahren zur Verklebung von Substraten bzw. Oberflächen anzubieten, bei dem die Vorteile von Zwei- oder Mehrkomponentensystem mit denen eines Einkomponenten-Klebebandes verbunden werden kann. Ein weiterer Teil der Aufgabe besteht in der Bereitstellung eines geeigneten Klebebandes.

### Zusammenfassung der Erfindung

Die Aufgabe konnte durch ein Verfahren gelöst werden, bei dem zum Verkleben zweier Oberflächen eines reaktives Klebstofffilm-Systems umfassend zumindest zwei Klebstoff-Filme (F1 und F2) eingesetzt wird, wobei die Klebstoff-Filme jeweils zumindest eine Reaktivkomponente (R1 und R2) umfassen. Die Verklebung wird durch eine Reaktion bewirkt, die die Anwesenheit beider Reaktivkomponenten (R1 und R2) erfordert. Das Verfahren zeichnet sich dadurch aus, dass vor der Verklebung zwischen den zur Reaktion miteinander in Kontakt zu bringenden Klebstoff-Filmen (F1 und F2) eine für die Reaktivkomponenten (R1 und R2) undurchlässige Trennschicht (T) vorgesehen ist, die erst zur Bewirkung der Verklebung zumindest teilflächig mittels eines Lasers entfernt wird. Hierdurch kommen die Klebstoff-Filme (F1 und F2) miteinander in unmittelbaren Kontakt, und die Reaktion unter Anwesenheit der beiden Reaktivkomponenten (R1 und R2) setzt ein.

Erfindungsgemäß eingesetzt wird ein reaktives Klebstofffilm-System umfassend zumindest zwei Klebstoff-Filme (F1 und F2), wobei die Klebstoff-Filme jeweils zumindest eine Reaktivkomponente (R1 und R2) umfassen. Das Klebstofffilm-System ist so ausgewählt, das eine Aktivierung des Klebstofffilm-Systems durch eine Reaktion bewirkt wird, die die Anwesenheit beider Reaktivkomponenten (R1 und R2) erfordert. Zwischen den zur Reaktion miteinander in Kontakt zu bringenden Klebstoff-Filmen (F1 und F2) ist eine für die Reaktivkomponenten (R1 und R2) undurchlässige Trennschicht (T) vorgesehen, so dass die Aktivierung des Klebstofffilm-Systems zunächst verhindert wird.

Weiterhin sind vorteilhafte Verfahrensführungen und Ausgestaltungen des erfindungsgemäß eingesetzten Klebstofffilm-Systems beschrieben.

### Detaillierte Beschreibung der Erfindung

Erfindungsgemäß wird das oben geschilderte Problem durch ein Verfahren gelöst, bei ein reaktives Klebstofffilm-System - im Folgenden auch kurz als "Klebesystem" bezeichnet - eingesetzt wird, das zumindest zwei Klebstoff-Filme (F1, F2) - im Folgenden auch kurz als "Klebefilme" bezeichnet - aufweist. Jeder dieser Klebefilme umfasst zumindest eine Reaktivkomponente (R1 bzw. R2). Das Klebesystem ist derart gewählt, dass es nicht von vornherein klebrig ist oder nicht die gewünschte Endklebkraft entwickelt, sondern zur Entwicklung einer Klebrigkeit oder aber zur Generierung gewünschter Klebkräfte erst einer Aktivierung bedarf. Entsprechend ist der Begriff "Klebstoff" im Sinne der Klebstoff-Filme so zu verstehen, dass es sich um einen Stoff handelt, der entweder erst nach Aktivierung seine Klebeigenschaften überhaupt entwickelt, oder aber bei dem von vornherein eine gewisse (insbesondere schwache) Klebrigkeit vorhanden ist, aber die Klebkräfte in der erforderlichen Höhe erst nach der Aktivierung ausgebildet werden. Unter "Bewirkung der Verklebung" wird der Prozess verstanden, durch den der Stoff seine Klebeigenschaften entwickelt bzw. in die Klebkräfte in der hinreichenden Höhe ausbildet.
Die Aktivierung findet mittels einer Reaktion statt, die die Anwesenheit beider Reaktivkomponenten im Reaktionssystem erfordert, bei der also beider Reaktivkomponenten miteinander in Kontakt treten können. Die entsprechende Reaktion wird daher im Rahmen dieser Schrift auch als "Aktivierungsreaktion" bezeichnet. Solange die Reaktivkomponenten nicht in Kontakt zueinander kommen, kann eine Reaktion, die die Aktivierung des Klebesystems erst bewirkt - also die Aktivierungsreaktion - nicht starten. Erst nach Zusammenführung der beiden Reaktivkomponenten wird die besagte Reaktion gestartet und die Verklebung bewirkt. Daher ist zunächst eine Trennschicht (T) zwischen den Klebefilme F1 und F2 vorgesehen, die derart ausgeführt ist, dass sie zunächst für die Reaktivkomponenten undurchlässig ist, mittels eines Lasers aber zumindest teilflächig entfernt werden kann. An den Stellen, an denen die Trennschicht entfernt worden ist können die Reaktivkomponenten R1 und R2 in Kontakt treten und die Reaktion tritt ein.

Diese Verfahrensführung erlaubt es, das reaktive Klebstofffilm-System in Form eines Klebebandes anzubieten, das aus zumindest den zwei Klebefilmen (F1 und F2) sowie die dazwischen - insbesondere vollflächig -angeordnete Trennschicht aufgebaut ist. Durch die Trennung kann das Klebeband gelagert werden, ohne dass während der Lagerung bereits eine Aktivierungsreaktion eintritt. Solche Klebebänder können beispielsweise zur Rolle aufgewickelt und so dem Anwender angeboten werden, insbesondere wenn zuvor zumindest eine oder gegebenenfalls beide offenliegenden Klebefilm-Oberflächen mit einer Schutzabdeckung versehen wurden Hierdurch wird insbesondere verhindert, dass eine Außenseiten-Kontaktierung der Klebefilme bei der Aufwicklung stattfindet.

Zur rein sprachlichen Unterscheidung wird einer der Klebefilme (F1) im Folgenden auch als "erster Klebefilm" bezeichnet, gemäß entsprechender Sprachregelung umfasst der erste Klebefilm als Reaktivkomponente (R1) die "erste Reaktivkomponente". Der andere Klebefilm (F2) wird im Folgenden auch als "zweiter Klebefilm" bezeichnet, und die betreffende Reaktivkomponente (R2) in diesem zweiten Klebefilm als "zweite Reaktivkomponente".

Klebebänder im Sinne dieser Schrift sind flächige Produkte, die ein- oder beidseitig klebend ausgestaltet sind. Klebebänder können als Einschichtsysteme ausgebildet sein, also als trägerfreie, insbesondere dünne Klebstofffilme, die auch als Transferklebebänder bezeichnet werden. In anderer Ausgestaltung können Klebebänder eine oder auch mehrere Trägerschichten aufweisen, die dem Klebeband insbesondere eine Eigenstabilität verleiht oder diese erhöht.
Die Dicke üblicher Klebebänder reicht in der Praxis häufig von wenigen Mikrometern bis hin zu einigen Millimetern und ist üblicherweise deutlich kleiner als die Ausdehnung in den Raumrichtungen in der Fläche. Die Ausdehnung in beiden Raumrichtungen in der Fläche soll durch den Begriff "Klebeband" nicht eingeschränkt werden. Häufig werden Klebebänder jedoch in Streifenform angeboten, so dass die Ausdehnung in einer Richtung in der Klebebandfläche deutlich größer ist als in der dazu senkrecht stehenden Richtung in der Fläche. Da von dem Klebeband in ihrer längsten Ausdehnung häufig in für die Anwendung benötigte Klebebandlängen vielfach abgelängt werden kann, kann diese Richtung in solchen Ausführungen des Klebebandes auch als "unendlich" angesehen werden. In dieser Richtung sind die betreffenden Klebebänder häufig zum Bereitstellen zur Rolle (archimedische Spirale) gewickelt.
Klebebänder - insbesondere solche in Streifenform - sind zur besseren Handhabung oder zu Zwecken der Verarbeitung häufig ein- oder beidseitig mit einem insbesondere antiadhäsiv ausgerüsteten Schutzmaterial, wie einem Trennpapier, einer Trennfolie oder dergleichen abgedeckt. Diese Schutzfolien werden zur Anwendung abgezogen, um die außenliegende Klebmassenschicht freizulegen.
Unter den Begriff "Klebeband" fallen in Sinne dieser Schrift auch konfektionierte, also zum Beispiel gestanzte, geschnittene oder von einem langen Band abgelängte, Klebebandabschnitte grundsätzlich beliebiger Form, die auch als Etiketten bezeichnet werden.

Unter "Aktivierung" wird im Sinne dieser Schrift - entsprechend der allgemein gültigen Definition - ein Prozess bezeichnet, durch den bestimmte Stoffe in einen reaktionsfähigeren, "aktivierten" Zustand versetzt werden. Im engeren Sinne bedeutet Aktivierung des Klebesystems, dass durch den reaktionsfähigen aktivierten Zustand eine Reaktion - die Aktivierungsreaktion - in Gang gesetzt wird, durch die das Klebesystem entweder a) überhaupt in einen klebfähigen Zustand überführt wird oder aber b) die für die beabsichtigte Anwendung gewünschten Klebkräfte erst hinreichend ausbildet. Die Reaktion kann beispielsweise eine Polymerisationsreaktion, eine polymeranaloge Reaktion, eine Vernetzungsreaktion oder eine Härtungsreaktion sein. Die Reaktion erfordert dabei die Anwesenheit der beiden Reaktivkomponenten bzw. deren aktivierter Formen.

### Trennschichten

Die Trennschicht ist derart ausgestaltet, dass sie für beide Reaktivkomponenten undurchlässig ist.
Bei der Trennschicht des erfindungsgemäßen Klebesystems kann es sich insbesondere um eine Metallschicht handeln. Dies kann eine Metallfolie sein, die bei der Herstellung des Klebebandes zwischen die Klebefilme eingebracht wird; beispielsweise durch einen Laminationsprozess.
Die Trennschicht kann hervorragend auch realisiert sein durch eine Bedampfung, Besputterung, elektrostatische Beschichtung oder sonstige Aufbringung des Trennschichtmaterials in kleinteiliger, atomarer, ionischer oder molekularer Form, und zwar insbesondere von Metallen, Metalloxiden oder dergleichen. Dies kann beispielweise auf einer der Klebefilme (F1 oder F2) geschehen, bevor der andere Klebefilm auflaminiert oder aufbeschichtet wird, oder auch auf beiden Klebefilme auf den jeweiligen Oberflächen, die nachher einander zugewandt sind. Bei Mehrschichtsystemen, die insbesondere in wechselnder Abfolge von ersten und zweiten Klebefilmen aufgebaut sind, können beispielweise auch jeweils auf eine Seite der betreffenden Klebefilme eine Trennbeschichtung aufgebracht sein und die Laminierung dann jeweils derart erfolgen, dass jeweils eine nicht beschichtete Seite auf eine beschichtete Seite des benachbarten Klebefilms gebracht wird.

Die erfindungsgemäß vorgesehene Trennschicht liegt sehr bevorzugt vollflächig und als geschlossene Schicht zwischen den zwei Klebefilmen F1 und F2 vor, um eine bestmögliche Barrierewirkung für die Reaktivkomponenten zu gewährleisten. Die erfindungsgemäß vorgesehene Trennschicht wird vorteilhaft in Dicken von 50 nm bis zu 2000 nm eingesetzt, kann aber in besonderen Ausführungen der Erfindung auch dünner oder dicker ausgestaltet sein.

Als Metall hat sich hervorragend Aluminium herausgestellt. Reine Metallschichten stellen eine hohe Barrierewirkung gegen die Migration und Diffusion der Reaktanden dar.
In weiter vorteilhafter Weise können als Trennschichten erfindungsgemäß Schichten aus Metalloxid (MeOx-Schichten) verwendet werden. Vorteilhafte Metalloxidschichten bestehen beispielweise aus Siliziumdioxid (SiO₂), Titandioxid (TiO₂) oder Zink-Zinn-Oxid (ZnSnO), oder sie umfassen eines oder mehrerer dieser Metalloxide.

Vorteilhaft wird die Beschichtung (insbesondere durch Metalle - wie beispielsweise Aluminium - oder Metalloxide - wie beispielweise SiO₂, TiO₂ und/oder ZnSnO - vollflächig und als geschlossene Schicht abgeschieden. Die erzeugten Schichtstärken weisen vorzugsweise eine Dicke von 50 nm - 2000 nm auf. Die Metall- bzw. Metalloxid-Schicht wird optimal durch das Beschichten mittels Sputterverfahren hergestellt. Sputtern ("Sputter-Beschichtung"), auch Kathodenzerstäubung unter Hochvakuum genannt, bedeutet das Abtragen bzw. Abstäuben von Material von einem Feststoff durch energetisches Ionenbombardement, um mit dem abgestäubten Material ein Substrat zu beschichten. Beim Magnetron-Sputterverfahren, das erfindungsgemäß eingesetzt werden kann, handelt es sich um ein so genanntes PVD-Verfahren (Physical Vapor Deposition - Physikalische Dampfphasenabscheidung). Der stabile Vakuumbeschichtungsprozess ermöglicht eine hohe Gleichmäßigkeit und Reinheit der Schicht. Bevorzugt wird so vorgegangen, dass die Beschichtungsquelle (Sputterquelle) ein Niederdruckplasma aus einem Edelgas (typischerweise Argon) erzeugt, was in einer Vakuumkammer im Druckbereich von 10⁻³ bis 10² mbar geschieht. Als Ausgangsmaterial für die Schicht dient das so genannte Target, das sich in der Sputterquelle befindet. Die Sputter-Verfahrenstechnik befindet sich technisch auf einem sehr hohen Niveau und eignet sich auch als Fertigungsprozess für eine Massenproduktion. Aber auch die galvanische Elektrolyse oder das CVD (Chemical-Vapour-Deposition)-Verfahren kann zur Erzeugung von Barriereschichten verwendet werden.

Die Trennschicht, insbesondere Metallschicht oder Metalloxidschicht, rekonditioniert nach Laserbestrahlung in nanoskaligen Metalloxidperlen in der Grenzfläche und gibt die Diffusion der Reaktivkomponenten frei. Das Metall bzw. Metalloxid wird durch die hohe Pulsleistungsdichte im Laserfokus von fest in gasförmig sublimiert und wird durch Abkühlung in den festen Aggregationszustand wieder überführt. Da das Metall in geringen Schichtstärken vorliegt und das Metall keine gasförmigen Nebenprodukte erzeugt, können die beiden Grenzflächen der Reaktivklebstoffe in Kontakt treten.

### Laser

Die Trennschichten können durch einen Laser entfernt werden, insbesondere durch Ablation oder Sublimation. Dabei wird insbesondere derart vorgegangen, dass mit dem Laser durch einen Klebefilm hindurch oder durch mehrere Schichten des Klebesystems hindurch gestrahlt wird. Bei Mehrschichtsystemen können auch mehrere Trennschichten nacheinander (gleichzeitig auch) entfernt werden. Dabei kann die Trennschicht vollflächig entfernt werden, oder es findet nur eine Entfernung in einem oder mehreren Bereichen statt. Hierdurch kann gesteuert werden, wie groß die Kontaktfläche werden soll, und die Kinetik der Reaktion bzw. des Initiierungsvorganges kann beeinflusst werden.

Als Laser können grundsätzlich übliche Standardlaser eingesetzt werden. Die verwendete Laserwellenlänge wird bevorzugt so gewählt, dass die Laserstrahlung mit höchster Transmission durch die Klebefilme und sonstigen eventuellen Schichten des Klebebandes emittieren kann. In dem Wellenlängenbereich von 800 bis 2000 nm besteht zum Beispiel für übliche Acrylathaftklebemassen keine oder nur eine sehr geringe Absorptionsbereitschaft. In diesem Bereich sind auch die erfindungsgemäßen Klebesysteme transluzent.

Vorzugsweise werden Festkörperlaser eingesetzt, deren Wellenlänge zur Durchstrahlung von üblichen Klebemassen und Releasematerialien hervorragend geeignet ist. Besonders bevorzugt werden Nd:YAG-Festkörperlaser eingesetzt. Ein Nd:YAG-Laser (kurz für Neodym-dotierter Yttrium-Aluminium-Granat-Laser) ist ein Festkörperlaser, der als aktives Medium einen Neodym-dotierten YAG-Kristall verwendet und meist infrarote Strahlung mit der Wellenlänge 1064 nm emittiert. Weitere Übergänge existieren bei 946 nm, 1320 nm und 1444 nm. Die Wellenlänge des emittierten Lichts dieses Lasers liegt - wie vorstehend beschrieben - im Bereich von 1,064 µm. Diese Wellenlänge wird von den eingesetzten Klebefilmen in der Regel nicht absorbiert, so dass diese Materialien für die betreffende Wellenlänge transluzent sind. Zudem können auch Releaseliner - beispielweise aus Polyethylenterephthalat (PET) - beschädigungsfrei mit dieser Wellenlänge durchstrahlt werden, so dass eventuell vorhandene Releaseliner vor der Aktivierung des erfindungsgemäßen Klebesystems nicht ausgedeckt werden müssen. Eine Konversion der Strahlung in andere Wellenlängen kann bei Bedarf durch Erzeugung der zweiten (532 nm) und dritten (355 nm) Harmonischen realisiert werden.
Grundsätzlich sind aber alle Gaslaser, Farbstofflaser, Feststofflaser, Metalldampflaser und Excimerlaser mit den geeigneten Wellenlängen geeignet.

### Klebesysteme

Als Klebesysteme werden solche Systeme eingesetzt, die aus mindestens zwei Klebefilmen bestehen, wobei in dem ersten Klebefilm eine erste Reaktivkomponente und in dem zweiten Klebefilm eine zweite Reaktivkomponente zugegen ist. Werden die beiden Reaktivkomponenten zusammengebracht, so startet die Aktivierungsreaktion, und das Klebesystem wird aktiviert.

Die Reaktivkomponenten (R1 und R2) können dabei insbesondere derart ausgewählt sein, i) dass sie miteinander reagieren können, oder ii) dass sie jeweils mit weiteren Komponenten der Klebefilme reagieren, aber nicht direkt miteinander, oder iii) dass sie sowohl miteinander als auch mit weiteren Komponenten der Klebefilme reagieren können.

In einer vorteilhaften Vorgehensweise ist die Aktivierungsreaktion eine Polymerisationsreaktion. Hierzu ist es vorteilhaft, wenn in einem oder beiden Klebstoff-Filmen jeweils in einer Matrix, die zu einer Grundstruktur des entsprechenden KlebstoffFilms führt, reaktive Monomere oder Reaktivharze vorhanden sind, die polymerisiert werden können.

In bevorzugter Weise enthält der erste reaktive Klebefilm (F1) eine polymere Filmbildner-Matrix (a), mindestens ein reaktives Monomer oder Reaktivharz (b) und als Reaktivkomponente (R1) mindestens einen Initiator, insbesondere Radikalinitiator (c). Der zweite reaktive Klebefilm (F2) enthält eine polymere Filmbildner-Matrix (a), mindestens ein reaktives Monomer oder Reaktivharz (b) und als Reaktivkomponente (R2) mindestens einen Aktivator (d).

Erfindungsgemäße, reaktive Klebefilme können insbesondere durch ein Verfahren hergestellt werden, das die folgenden Schritte umfasst:
1. Auflösen und/oder Feinverteilen der Inhaltsstoffe in einem oder mehreren Lösemittel(n) und/oder Wasser,
2. Mischen der aufgelösten oder feinverteilten Inhaltsstoffe,
3. Beschichten eines Trennliners oder -papiers, eines Trägermaterials oder eines Haftklebstoffs mit der Mischung aufgelöster oder verteilter Inhaltsstoffe nach Schritt 2,
4. Verdunsten des Lösemittels und/oder Wassers und
5. Gegebenenfalls Aufwickeln des reaktiven Klebstofffilms zu einer Rolle.
wobei die Inhaltsstoffe eine polymere Filmbildner-Matrix, mindestens ein reaktives Monomer oder Reaktivharz und als Reaktivkomponente ein Reagens, ausgewählt aus einem Initiator, insbesondere Radikalinitiator, beziehungsweise einem Aktivator, umfassen.

Schritte 1. und 2. können auch in einem Schritt erfolgen, die Inhaltsstoffe also gleichzeitig aufgelöst und/oder feinverteilt werden.

In einer weiteren erfindungsgemäßen Ausführungsform können die erfindungsgemäßen, reaktiven Klebefilme durch ein lösungsmittel- und wasserfreies Verfahren hergestellt werden. Entsprechend werden Formulierungen für erfindungsgemäße, reaktive Klebefilme durch Einwirkung von Wärme und/oder Scherung z. B. in einem Hotmeltkneter oder Compoundierextruder hergestellt.

### Polymere Filmbildner-Matrix

Die erfindungsgemäßen Klebeffilme bestehen sehr bevorzugt aus einer Matrix, die nachfolgend polymere Filmbildner-Matrix genannt wird, in der die reaktiven, zu polymerisierenden Monomere und/oder Reaktivharze enthalten sind. Aufgabe dieser Matrix ist ein inertes Grundgerüst für die reaktiven Monomere und/oder Klebharze zu bilden, so dass diese nicht flüssig vorliegen, sondern in einem Film oder einer Folie eingelagert sind. Auf diese Art und Weise wird eine bequeme Handhabung gewährleistet.

Geeignete Filmbildner-Matrices zur Verwendung in der vorliegenden Erfindung sind vorzugsweise ausgewählt aus derfolgenden Liste: ein thermoplastisches Polymer, wie z.B. ein Polyester bzw. Copolyester, ein Polyamid bzw. Copolyamid, ein Polyacrylsäureester, ein Acrylsäureester-Copolymer, ein Polymethacrylsäureester, ein Methacrylsäureester-Copolymer, thermoplastische Polyurethane sowie chemisch oder physikalisch vernetzte Stoffe der zuvor genannten Verbindungen. Darüber hinaus können auch Blends aus verschiedenen thermoplastischen Polymeren eingesetzt werden.

Weiterhin sind auch Elastomere und thermoplastische Elastomere alleinig oder im Gemisch als polymere Filmbildner-Matrix denkbar. Bevorzugt werden thermoplastische Polymere, insbesondere semikristalline.

Besonders bevorzugt sind thermoplastische Polymere mit Erweichungstemperaturen kleiner als 100°C. In diesem Zusammenhang steht der Begriff Erweichungspunkt für die Temperatur, ab der das thermoplastische Granulat mit sich selbst verklebt. Wenn es sich bei dem Bestandteil der polymeren Filmbildner-Matrix um ein semikristallines thermoplastisches Polymer handelt, dann weist es sehr bevorzugt neben seiner Erweichungstemperatur (die mit dem Schmelzen der Kristallite zusammenhängt) eine Glasübergangstemperatur von höchstens 25 °C, bevorzugt höchstens 0 °C auf.

In einer bevorzugten, erfindungsgemäßen Ausführungsform wird ein thermoplastisches Polyurethan eingesetzt. Vorzugsweise besitzt das thermoplastische Polyurethan eine Erweichungstemperatur von kleiner als 100°C, insbesondere kleiner als 80°C.

In einer besonders bevorzugten, erfindungsgemäßen Ausführungsform wird Desmomelt 530® als polymere Filmbildner-Matrix eingesetzt, das im Handel bei der Bayer Material Science AG, 51358 Leverkusen, Deutschland, erhältlich ist. Desmomelt 530® ist ein hydroxyl-terminiertes, weitgehend lineares, thermoplastisches, stark kristallisierendes Polyurethan-Elastomer.

Die Menge der polymeren Filmbildner-Matrix liegt erfindungsgemäß im Bereich von etwa 20-80 Gew.-%, bevorzugt etwa 30-50 Gew.-%, bezogen auf die Gesamtmischung der Bestandteile des reaktiven Klebefilms. Am stärksten bevorzugt werden 35-45 Gew.-%, bevorzugt etwa 40 Gew.-% der polymeren Filmbildner-Matrix, bezogen auf die Gesamtmischung der Bestandteile des reaktiven Klebefilms, eingesetzt. Die Gesamtmischung der Bestandteile des reaktiven Klebefilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.-%) erhalten wird.

### Reaktives Monomer oder Reaktivharz

Wie hierin verwendet, soll das reaktive Monomer oder Reaktivharz für ein Monomer oder Harz stehen, das insbesondere zu einer Radikalkettenpolymerisation in der Lage ist.

Erfindungsgemäß ist ein geeignetes, reaktives Monomer ausgewählt aus der Gruppe bestehend aus Acrylsäure, Acrylsäureester, Methacrylsäure, Methacrylsäureester, Diacrylate, Dimethacrylate, Triacrylate, Trimethacrylate, höher funktionelle Acrylate, höher funktionelle Methacrylate, Vinylverbindungen und/oder oligomeren bzw. polymeren Verbindungen mit Kohlenstoff-Kohlenstoff-Doppelbindungen.

In einer bevorzugten Ausführungsform ist das reaktive Monomer ein oder mehrere Vertreter ausgewählt aus der Gruppe, bestehend aus: Methylmethacrylat (CAS-Nr. 80-62-6), Methacrylsäure (CAS-Nr. 79-41-4), Cyclohexylmethacrylat (CAS-Nr. 101-43-9), Tetrahydrofurfuryl-methacrylat (CAS-Nr. 2455-24-5), 2-Phenoxyethylmethacrylat (CAS-Nr. 10595-06-9), Hydroxyalkylmethacrylate, insbesondere 2-Hydroxyethylmethacrylat (CAS-Nr. 868-77-9), 2-Hydroxypropylmethacrylat (CAS-Nr. 923-26-2 und 27813-02-1), 4-Hydroxybutylmethacrylat (CAS-Nr. 29008-35-3 und 997-46-6), Di-(ethylenglykol)-methylethermethacrylat (CAS-Nr. 45103-58-0) und/oder Ethylenglykoldimethacrylat (CAS-Nr. 97-90-5).

In einer weiteren bevorzugten, erfindungsgemäßen Ausführungsform enthält der reaktive Klebefilm eine Mischung von Cyclohexylmethacrylat, Tetrahydrofurfurylmethacrylat, Methacrylsäure und Ethylenglykoldimethacrylat als zu polymerisierende, reaktive Monomere.

In einer weiteren bevorzugten, erfindungsgemäßen Ausführungsform enthält der reaktive Klebefilm eine Mischung von 2-Phenoxyethylmethacrylat, 2-Hydroxyethylmethacrylat, 2-Hydroxypropylmethacrylat und Ethylenglykoldimethacrylat als zu polymerisierende, reaktive Monomere.

In einer weiteren bevorzugten, erfindungsgemäßen Ausführungsform enthält der reaktive Klebefilm eine Mischung von 2-Phenoxyethylmethacrylat, 2-Hydroxyethylmethacrylat und Ethylenglykoldimethacrylat als zu polymerisierende, reaktive Monomere.

In einer weiteren bevorzugten, erfindungsgemäßen Ausführungsform enthält der reaktive Klebefilm 2-Phenoxyethylmethacrylat als zu polymerisierendes, reaktives Monomer.

In einer weiteren bevorzugten, erfindungsgemäßen Ausführungsform enthält der reaktive Klebefilm eine Mischung von Methylmethacrylat, Methacrylsäure und Ethylenglykoldimethacrylat als zu polymerisierende, reaktive Monomere.

In einer weiteren bevorzugten, erfindungsgemäßen Ausführungsform enthält der reaktive Klebefilm eine Mischung von 2-Phenoxyethylmethacrylat und Ethylenglykoldimethacrylat als zu polymerisierende, reaktive Monomere.

In einer weiteren bevorzugten, erfindungsgemäßen Ausführungsform enthält der reaktive Klebefilm eine Mischung von Di-(ethylenglykol)methylethermethacrylat und Ethylenglykoldimethacrylat als zu polymerisierende, reaktive Monomere.

Als Reaktivharz(e) können oligomere mono-, di-, tri- und höher funktionalisierte (Meth)acrylate ausgewählt werden. Sehr vorteilhaft werden diese im Gemisch mit zumindest einem reaktiven Monomer eingesetzt.

Jede dieser bevorzugten Ausführungsformen kann erfindungsgemäß mit einem thermoplastischen Polyurethan, wie z.B. Desmomelt 530®, als polymere Filmbildner-Matrix kombiniert werden.

Die Menge des reaktiven Monomers/der reaktiven Monomere/des Reaktivharzes/der Reaktivharze liegt erfindungsgemäß im Bereich von etwa 20-80 Gew.-%, bevorzugt etwa 40-60 Gew.-%, bezogen auf die Gesamtmischung der Bestandteile des reaktiven Klebstofffilms. Am stärksten bevorzugt werden etwa 40-50 Gew.-% des reaktiven Monomers/der reaktiven Monomere/des Reaktivharzes/der Reaktivharze, bezogen auf die Gesamtmischung der Bestandteile des reaktiven Klebefilms, eingesetzt. Die Gesamtmischung der Bestandteile des reaktiven Klebefilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.-%) erhalten wird.

### Initiator, insbesondere Radikalinitiator

Wie hierin verwendet, steht der Begriff Initiator, insbesondere Radikalinitiator bzw. radikalbildende Substanz (oder auch Härter) für eine Verbindung, die eine Polymerisationsreaktion oder Vernetzung des Klebstoffs einleiten kann. Der Initiator, insbesondere Radikalinitiator nimmt allerdings zu einem sehr geringen Anteil am Reaktionsgeschehen teil und bildet folglich keinen die Eigenschaften der Verklebung bestimmenden Polymeranteil.

In der vorliegenden Erfindung wird dem mindestens einen ersten, reaktiven Klebefilm des Klebesystems ein Initiator, insbesondere Radikalinitiator zugesetzt.

Bevorzugt werden Radikalinitiatoren. Es können alle im Stand der Technik bekannten Radikalinitiatoren eingesetzt werden. Bevorzugte Radikalinitiatoren sind Peroxide, Hydroperoxide und Azoverbindungen.

In einer besonders bevorzugten, erfindungsgemäßen Ausführungsform ist der Radikalinitiator ein organisches Peroxid oder Hydroperoxid. Besonders bevorzugt ist α ,α-Dimethylbenzylhydroperoxid, das auch als Cumolhydroperoxid (CAS-Nr. 80-15-9) bekannt ist. Weiterhin bevorzugt sind Diisopropylbenzol-hydroperoxid (CAS-Nr. 26762-93-6), p-Menthanhydroperoxid (CAS-Nr. 26762-92-5) sowie 1,1,3,3-Tetramethylbutylhydroperoxid (CAS-Nr. 5809-08-5).

Die Menge des Radikalinitiators liegt erfindungsgemäß im Bereich von etwa 3-30 Gew.-%, bevorzugt etwa 8-15 Gew.-%, bezogen auf die Gesamtmischung der Bestandteile des reaktiven Klebefilms. Am stärksten bevorzugt werden etwa 9-11 Gew.-% Radikalinitiator, bezogen auf die Gesamtmischung der Bestandteile des reaktiven Klebefilms, eingesetzt. Die Gesamtmischung der Bestandteile des reaktiven Klebefilms steht hierfür die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.-%) erhalten wird.

### Aktivator

Wie hier verwendet, steht der Begriff Aktivator für eine Verbindung, die bereits bei sehr geringen Konzentrationen den Ablauf der Polymerisation erst ermöglicht oder beschleunigt. Aktivatoren können auch Beschleuniger oder Akzeleratoren genannt werden.
In der vorliegenden Erfindung wird dem mindestens einen zweiten, reaktiven Klebefilm des Klebesystems ein Aktivator zugesetzt.
Geeignete Aktivatoren zur Verwendung in der vorliegenden Erfindung, wenn ein radikalisch polymerisierbares System aktiviert werden soll, sind beispielsweise ausgewählt aus der Gruppe, bestehend aus: einem Amin, einem Dihydropyridin-Derivat, einem Übergangsmetallsalz oder einem Übergangsmetallkomplex.
Insbesondere werden tertiäre Amine zur Aktivierung der radikalbildenden Substanz eingesetzt.

In einer ersten bevorzugten, erfindungsgemäßen Ausführungsform ist der Aktivator 3,5-Diethyl-1,2-dihydro-1-phenyl-2-propylpyridin (auch PDHP genannt, CAS-Nr. 34562-31-7).

Die Menge dieses Aktivators liegt erfindungsgemäß im Bereich von größer 0 bis etwa 40 Gew.-%, bevorzugt etwa 15-25 Gew.-%, bezogen auf die Gesamtmischung der Bestandteile des reaktiven Klebstofffilms. Am stärksten bevorzugt werden etwa 16-22 Gew.-%, noch bevorzugter 18-20 Gew.-% Aktivator, bezogen auf die Gesamtmischung der Bestandteile des reaktiven Klebstofffilms, eingesetzt. Die Gesamtmischung der Bestandteile des reaktiven Klebstofffilms steht hier für die gesamte Menge der eingesetzten polymeren Filmbildner-Matrix (a), der reaktiven Monomere oder Reaktivharze (b), des Reagens (c) sowie weiterer optional vorliegender Komponenten, die als Summe (in Gew.-%) erhalten wird.

In einer weiteren sehr bevorzugten Ausführung der Erfindung wird als Aktivator eine Komplexverbindung mit einem Mangan-, Eisen- oder Kobalt-Ion als Zentralatom und einer Kohlenstoff-Stickstoff-Doppelbindungen enthaltenden Verbindung als Liganden umfasst. Die Kohlenstoff-Stickstoff-Doppelbindungen enthaltende Verbindung liegt dabei in der Komplexverbindung anionisch vor. Das Mangan-, Eisen- oder Kobalt-Ion ist in der Komplexverbindung zweifach positiv geladen, während die Kohlenstoff-Stickstoff-Doppelbindungen enthaltende Verbindung zweifach negativ geladen ist. Das Mangan-, Eisen- oder Kobalt-Ion ersetzt in der Komplexverbindung jeweils zwei Wasserstoff-Atome, die der Ligand vor der Umsetzung zur Komplexverbindung an den Stickstoff-Atomen getragen hat.
Vorteilhaft hat der Ligand eine cyclische Struktur, bevorzugt eine Porphyrin-, Porphyrazin- oder Phthalocyanin-Ringstruktur. Diese Strukturen sind als Gerüststrukturen zu verstehen. Die Liganden können gegebenenfalls Substituenten anstelle der an Kohlenstoff-Atome gebundenen H-Atome tragen. In diesem Fall spricht man von Derivaten dieser Verbindungen. Geeignete Substituenten sind ausgewählt aus der Gruppe, bestehend aus Fluor, Chlor, Brom, lod, Methyl, Ethyl, Propyl, Isopropyl, Butyl, tert.-Butyl, -OH, -NH₂,-NO₂.
Ein besonders geeigneter Aktivator dieser Ausführungsvariante umfasst Eisen(II)-phthalocyanin (CAS-Nr. 132-16-1).
Die Menge des Aktivators liegt im Falle der Verwendung von Komplexverbindungen im Bereich von größer 0 bis etwa 10 Gew.-%, bevorzugt etwa 0,1-5,0 Gew.-%. Am stärksten bevorzugt werden etwa 0,2-3,0 Gew.-%, noch bevorzugter 0,5-2,0 Gew.-% Aktivator, bezogen auf die Gesamtmischung der Bestandteile der reaktiven Klebstoffkomponente, eingesetzt. Die Gesamtmischung der Bestandteile der reaktiven Klebstoffkomponente steht hier für die gesamte Menge der eingesetzten Komponenten, die die reaktiven Monomere oder Reaktivharze (a), den Aktivator (b), den Radikalinitiator (c), die polymere Filmbildner-Matrix (d) und/oder weitere optional vorliegende Komponenten einschließen, die als Summe (in Gew.-%) erhalten wird.

### Vernetzer

Wie hier verwendet, steht der Begriff Vernetzer für chemische Verbindungen, die imstande sind, lineare Molekülketten mit reaktionsfähigen, funktionellen Gruppen zu versehen, damit sich aus den zweidimensionalen Strukturen über Ausbildung intermolekularer Brücken dreidimensional-vernetzte Strukturen bilden können.
Typische Beispiele für Vernetzer sind chemische Verbindungen, die innerhalb des Moleküls oder an den beiden Molekülenden zwei oder mehr gleiche oder unterschiedliche funktionelle Gruppen aufweisen und folglich Moleküle gleicher oder auch unterschiedlicher Strukturen miteinander vernetzen können. Außerdem kann ein Vernetzer mit dem reaktiven Monomer oder Reaktivharz, wie oben definiert, reagieren, ohne dass es dabei zu einer Polymerisation im eigentlichen Sinne kommt. Denn im Gegensatz zum Aktivator, wie oben beschrieben, kann ein Vernetzer in das Polymer-Netzwerk eingebaut werden.

In einer besonders bevorzugten, erfindungsgemäßen Ausführungsform wird Ethylenglykoldimethacrylat (CAS-Nr. 97-90-5) als Vernetzer und/oder reaktives Monomer eingesetzt (siehe oben).

Bevorzugte Vernetzer sind außerdem Diacrylate, Dimethacrylate, Triacrylate, Trimethacrylate, höher funktionelle Acrylate und/oder höher funktionelle Methacrylate.

### Weitere Bestandteile des reaktiven Klebstofffilms

Die reaktiven Klebefilme der vorliegenden Erfindung können gegebenenfalls weitere Additive und/oder Hilfsstoffe enthalten, die im Stand der Technik bekannt sind. Hier sind beispielsweise Füllstoffe, Farbstoffe, Farbpigmente, Keimbildner, rheologische Additive, Blähmittel, klebverstärkende Additive (Haftvermittler, Tackifier-Harze), Klebstoffe, Haftklebstoffe, Compoundierungsmittel, Weichmacher und/oder Alterungs-, Licht- und UV-Schutzmittel, zum Beispiel in Form von primären und sekundären Antioxidantien zu nennen.

### Vorteilhafte Ausgestaltungen der reaktiven-Klebstofffilme F1 und F2

In einer bevorzugten, erfindungsgemäßen Ausführungsform umfasst der mindestens eine erste Klebefilm (F1) eine Mischung der folgenden Bestandteile: thermoplastisches Polyurethan, insbesondere Desmomelt 530®, Cyclohexylmethacrylat, Tetrahydrofurfurylmethacrylat, Methacrylsäure, Ethylenglykoldimethacrylat und Cumolhydroperoxid.

In einer weiteren bevorzugten, erfindungsgemäßen Ausführungsform umfasst der mindestens eine erste Klebefilm (F1) eine Mischung der folgenden Bestandteile: thermoplastisches Polyurethan, insbesondere Desmomelt 530®, Methylmethacrylat, Methacrylsäure, Ethylenglykoldimethacrylat und Cumolhydroperoxid.

In einer weiteren bevorzugten, erfindungsgemäßen Ausführungsform umfasst der mindestens eine erste Klebefilm (F1) eine Mischung der folgenden Bestandteile: thermoplastisches Polyurethan, insbesondere Desmomelt 530®, 2-Phenoxyethylmethacrylat, Ethylenglykoldimethacrylat und Cumolhydroperoxid.

In einer weiteren bevorzugten, erfindungsgemäßen Ausführungsform umfasst der mindestens eine erste Klebefilm (F1) eine Mischung der folgenden Bestandteile: thermoplastisches Polyurethan, insbesondere Desmomelt 530®, Di-(ethylenglykol)methylethermethacrylat, Ethylenglykoldimethacrylat und Cumolhydroperoxid.

Jede dieser bevorzugten, erfindungsgemäßen Ausführungsformen enthält etwa 20-80 Gew. % thermoplastisches Polyurethan, etwa 20-80 Gew. % reaktive(s) Monomer(e) und etwa 3-30 Gew. % Cumolhydroperoxid, vorzugsweise etwa 30-50 Gew. % thermoplastisches Polyurethan, etwa 40-60 Gew. % reaktive Monomere und etwa 8-15 Gew. % Cumolhydroperoxid, bezogen auf die Gesamtmischung der Bestandteile des reaktiven Klebefilms.

In einer bevorzugten, erfindungsgemäßen Ausführungsform umfasst der mindestens eine zweite Klebefilm (F2) eine Mischung der folgenden Bestandteile: thermoplastisches Polyurethan, insbesondere Desmomelt 530®, Cyclohexylmethacrylat, Tetrahydrofurfurylmethacrylat, Methacrylsäure, Ethylenglykoldimethacrylat und PDHP.

In einer weiteren bevorzugten, erfindungsgemäßen Ausführungsform umfasst der mindestens eine zweite Klebefilm (F2) eine Mischung der folgenden Bestandteile: thermoplastisches Polyurethan, insbesondere Desmomelt 530®, Methylmethacrylat, Methacrylsäure, Ethylenglykoldimethacrylat und PDHP.

In einer weiteren bevorzugten, erfindungsgemäßen Ausführungsform umfasst der mindestens eine zweite Klebefilm (F2) eine Mischung der folgenden Bestandteile: thermoplastisches Polyurethan, insbesondere Desmomelt 530®, 2-Phenoxyethylmethacrylat, Ethylenglykoldimethacrylat und PDHP.

In einer weiteren bevorzugten, erfindungsgemäßen Ausführungsform umfasst der mindestens eine zweite Klebefilm (F2) eine Mischung der folgenden Bestandteile: thermoplastisches Polyurethan, insbesondere Desmomelt 530®, Di-(ethylenglykol)methylethermethacrylat, Ethylenglykoldimethacrylat und PDHP.

Jede dieser bevorzugten, erfindungsgemäßen Ausführungsformen enthält etwa 20-80 Gew. % thermoplastisches Polyurethan, etwa 20-80 Gew. % reaktive(s) Monomer(e) und größer 0 bis etwa 40 Gew. % PDHP, vorzugsweise etwa 30-50 Gew. % thermoplastisches Polyurethan, etwa 40-60 Gew. % reaktive(s) Monomer(e) und etwa 15-25 Gew. % PDHP, bezogen auf die Gesamtmischung der Bestandteile des reaktiven Klebefilms.

Wie hierin verwendet, bezieht sich die Gesamtmischung der Bestandteile des reaktiven Klebefilms auf die gesamte Menge der eingesetzten polymeren Filmbildner-Matrix (a), der/des reaktiven Monomere/Monomers und oder der/des Reaktivharze/Reaktivharzes (b), des Reagens (c) sowie weiterer optional vorliegender Komponenten, die als Summe (in Gew.-%) erhalten wird.

Der erste Klebefilm (F1) und/oder der zweite Klebefilm (F2) besitzen in der Regel eine Schichtdicke im Bereich von etwa 20-200 µm, bevorzugt etwa 30-100 µm, bevorzugter etwa 40-60 µm und besonders bevorzugt etwa 50 µm. Zur Herstellung größerer Schichtdicken kann es von Vorteil sein, mehrere Klebefilmschichten zusammen zu laminieren.

Zudem ist in einer sehr bevorzugten Vorgehensweise der erfindungsgemäße, reaktive Klebefilm dadurch gekennzeichnet, dass er bereits vor der Aktivierung haftklebrige Eigenschaften besitzt. Als haftklebrige Stoffe sind gemäß Römpp solche viskoelastischen Klebstoffe definiert (Römpp Online 2013, Dokumentkennung RD-08-00162), deren abgebundener, trockener Film bei Raumtemperatur permanent klebrig ist und klebfähig bleibt. Die Haftklebung erfolgt durch leichten Anpressdruck sofort auf fast allen Substraten. Als leichter Anpressdruck ist hier ein Anpressdruck von größer 0 bar, der für eine Dauer von größer 0 Sekunden ausgeübt wird, gemeint.

### Weitere Klebebandschichten

Prinzipiell ist es möglich, zwischen den Klebefilmen F1 und F2 weitere Schichten anzuordnen, sofern diese für zumindest eine der Reaktivkomponenten, bevorzugt für beide Reaktivkomponenten, durchlässig ist. Solche Schichten können beispielweise vorgesehen sein, um die Stabilität des Klebesystems zu erhöhen. Derartige Schichten können beispielsweise aus Materialien vorgesehen sein, die für zumindest eine der Reaktivkomponenten permeabel ist, und/oder Öffnungen aufweisen, etwa eine Vielzahl von Löchern aufweisen oder Netzstruktur besitzen.
Vorzugsweise sind die Materialien solcher weiteren Schichten gegenüber der Laserbestrahlung inert.

Das erfindungsgemäße Klebesystem wird insbesondere als doppelseitig klebendes Klebeband angeboten und/oder eingesetzt. Zur besseren Handhabbarkeit - etwa für die Lagerung, die Aufwicklung zur Rolle, den Transport usw. - eines solchen Klebebandes ist es vorteilhaft, wenn das Klebeband vor der Anwendung auf zumindest einer der außen liegenden Klebefilm-Oberflächen, gegebenenfalls auf beiden außenliegenden Klebefilm-Oberflächen, mit einer Schutzabdeckung ("Trennabdeckung", "Liner" "Releaseliner") versehen wurden Hierdurch wird insbesondere verhindert, dass eine Außenseiten-Kontaktierung der Klebefilme bei der Aufwicklung stattfindet oder bei Lagerung, Transport oder dergleichen verklebt, verschmutzt oder beschädigt wird. Die Schutzabdeckung wird dann jeweils entfernt, bevor die offene Klebmassenfläche für die Anwendung benötigt wird. Als Material für die Schutzabdeckung können dabei alle hierfür an sich bekannten, insbesondere trennwirksamen, Materialien eingesetzt werden; dabei handelt es sich insbesondere um antiadhäsive Materialien oder antiadhäsiv beschichtete (insbesondere silikonisierte) Materialien, wie beispielweise Silikone, silikonisierte Papiere, Glassinepapiere, beschichtete oder unbeschichtete HDPE-Liner (Niederdruck-Polyethylen), beschichtete oder unbeschichtete LDPE-Liner (Hochdruck-Polyethylen), beschichtete oder unbeschichtete MOPP- und BOPP-Liner (monoaxial bzw. biaxial orientiertes Polypropylen), beschichtete oder unbeschichtete PET-Liner (Polyethylenterephthalat) und dergleichen.

### Reaktives Klebstoffsystem

Das erfindungsgemäße Klebstofffilmsystem (Klebesystem) ist dadurch gekennzeichnet, dass es mindestens zwei reaktive Klebstofffilme (Klebefilme) F1 und F2 umfasst, die durch eine laserablatierbare Trennschicht zunächst voneinander getrennt sind. Gegebenenfalls kann das erfindungsgemäße Klebesystem weitere Träger, Trennpapiere und/oder Trennliner aufweisen.
In einer Weiterentwicklung der Erfindung weist das erfindungsgemäße Klebesystem mehrere erste Klebefilme (F1) und/oder mehrere zweite Klebefilme (F2) auf, wobei insbesondere jeweils abwechselnd ein erster und ein zweiter Klebefilm aufeinanderfolgen, so dass ein Klebesystem mit drei oder mehr Klebefilmen resultiert und insbesondere eine Folge F1-F2-F1(-F2...) bzw. F2-F1-F2(-F1...) verwirklich ist. Dabei können jeweils zwischen allen Klebefilmen Trennschichten wie erfindungsgemäß beschrieben (und gegebenenfalls weitere - insbesondere für die Reaktivkomponenten permeable - Schichten, wie beschrieben) vorgesehen sein. Alternativ können jeweils zwischen zwei aufeinanderfolgenden Klebefilme unterschiedlichen Typs (F1 und F2) eine laserablatierbare Trennschicht vorgesehen sein, während solche Zweier-Klebefilm-Verbunde zu weiteren Zweier-Klebefilm-Verbunden derselben Art durch nicht laserablatierbare Schichten getrennt sind und somit das gesamte Klebesystem aufgebaut wird. Statt Zweierverbunden können auch größere Klebefilm-Verbunde, in denen die mehr als zwei Klebefilme unterschiedlichen Typs jeweils durch laserablatierbare Trennschichten getrennt sind, zu den nächsten Klebefilm-Verbunden des Klebesystems durch nicht laserablatierbare Schichten abgetrennt sein. Das gesamte Klebesystem kann aus lauter gleich aufgebauten oder auch aus unterschiedlich aufgebauten Klebefilm-Verbunden zusammengesetzt sein und insbesondere auch weitere Schichten aufweisen.
Mittels des erfindungsgemäßen Verfahrens werden dann einige oder alle Trennschichten ganz oder teilweise entfernt, so dass die Aktivierung des Klebesystems eintritt. Die Aktivierungsreaktion findet dann durch das ganze Klebesystem hindurch statt oder jeweils in den beschriebenen Klebefilm-Verbunden.

Die Aktivierungsreaktion läuft insbesondere vorteilhaft derart ab, dass das Klebesystem vernetzt und aushärtet, sobald der erste und der zweite reaktive Klebefilm F1 und F2 - insbesondere vorteilhaft unter mäßigem Druck, bevorzugt 0,5 bis 3 bar, bei Raumtemperatur (23°C) - flächig in Kontakt gebracht werden, indem die Trennschicht zumindest teilflächig entfernt wurde. Wahlweise sind höhere bzw. niedrigere Temperaturen auch möglich. Der genannte mäßige Druck soll insbesondere von Hand zu erreichen sein. Die Kontaktzeit beträgt erfindungsgemäß bei Raumtemperatur einige Sekunden bis einige Minuten, bevorzugt 10 bis 60 Sekunden. Der Druck kann maschinell oder manuell aufgebracht werden.

Weiterhin kann das reaktive Klebesystem der Erfindung weitere Filme, Schichten, Klebstoffe sowie permanente und oder temporäre Träger umfassen.

Geeignete Trägermaterialien sind einem Fachmann auf dem Gebiet bekannt. Beispielsweise können als permanente Träger Folien (Polyester, PET, PE, PP, BOPP, PVC, Polyimide), Vliese, Schäume, Gewebe und/oder Gewebefolien verwendet werden. Temporäre Träger sollten mit einer Trennschicht versehen sein, wobei die Trennschicht in der Regel aus einem Silikontrennlack oder einem fluorierten Trennlack besteht oder polyolefinischen Charakter (HDPE, LDPE) aufweist.

Gegebenenfalls kann es notwendig sein, dass die Oberflächen der zu verklebenden Substrate durch ein physikalisches, chemisches und/oder physikalisch-chemisches Verfahren vorbehandelt werden. Hier ist beispielsweise das Aufbringen eines Primers oder einer Haftvermittlerzusammensetzung vorteilhaft.

### Substrate

Geeignete Substrate, die zur Verklebung über das erfindungsgemäße, reaktive Klebesystem geeignet sind, sind Metalle, Glas, Holz, Beton, Stein, Keramik, Textil und/oder Kunststoffe. Die zu verklebenden Substrate können gleich oder verschieden sein.

In einer bevorzugten Ausführungsform wird das erfindungsgemäße, reaktive Klebstoffsystem zur Verklebung von Metallen, Glas und Kunststoffen eingesetzt. In einer besonders bevorzugten, erfindungsgemäßen Ausführungsform werden Polycarbonate und eloxiertes Aluminium verklebt.

Die zu verklebenden Metallsubstrate können generell aus allen geläufigen Metallen und Metalllegierungen gefertigt werden. Bevorzugt kommen Metalle, wie zum Beispiel Aluminium, Edelstahl, Stahl, Magnesium, Zink, Nickel, Messing, Kupfer, Titan, eisenhaltige Metalle und Legierungen zum Einsatz. Die zu verklebenden Teile können außerdem aus unterschiedlichen Metallen aufgebaut sein.

Geeignete Kunststoffsubstrate sind beispielsweise Acrylnitril-Butadien-Styrol-Copolymere (ABS), Polycarbonate (PC), ABS/PC-Blends, PMMA, Polyamide, Glasfaserverstärkte Polyamide, Polyvinylchlorid, Polyvinylenfluorid, Cellulose Acetat, Cycloolefin-Copolymere, Flüssigkristallpolymere (LCP), Polylactid, Polyetherketone, Polyetherimid, Polyethersulfon, Polymethacrylmethylimid, Polymethylpenten, Polyphenylether, Polyphenylensulfid, Polyphthalamid, Polyurethane, Polyvinylacetat, Styrol Acrylnitril Copolymere, Polyacrylate bzw. Polymethacrylate, Polyoxymethylen, Acrylester-Styrol-Acrylnitril Copolymere, Polyethylen, Polystyrol, Polypropylen und/oder Polyester, wie z.B. Polybutylenterephthalate (PBT) und/oder Polyethylenterephthalat (PET).

Substrate können lackiert, bedruckt, bedampft oder besputtert sein.

Die zu verklebenden Substrate können jede beliebige Form annehmen, die für die Verwendung des resultierenden Verbundkörpers erforderlich ist. In der einfachsten Form sind die Substrate eben. Außerdem können auch dreidimensionale Substrate, die z.B. geneigt sind, mit dem erfindungsgemäßen, reaktiven Klebstoffsystem verklebt werden. Die zu verklebenden Substrate können auch die verschiedensten Funktionen einnehmen, wie zum Beispiel Gehäuse, Sichtfenster, Versteifungselemente, etc.

### Verfahren zur Herstellung der reaktiven Klebefilme

Die erfindungsgemäßen, reaktiven Klebefilme werden in einer bevorzugten Vorgehensweise durch das nachfolgend beschriebene Verfahren hergestellt:
In einem ersten Schritt werden die Inhaltsstoffe in einem oder mehreren Lösemittel(n) und/oder Wasser gelöst bzw. fein verteilt. Alternativ ist kein Lösemittel und/oder Wasser notwendig, da die Inhaltsstoffe bereits vollständig ineinander löslich sind (ggf. unter Einwirkung von Wärme und/oder Scherung). Geeignete Lösemittel sind im Stand der Technik bekannt, wobei bevorzugt Lösemittel eingesetzt werden, in denen mindestens einer der Inhaltsstoffe eine gute Löslichkeit aufweist. Besonders bevorzugt ist Aceton.

Wie hierin verwendet, umfasst der Begriff Inhaltsstoff entweder mindestens ein reaktives Monomer (a), einen Radikalinitiator (b) und eine polymere Filmbildner-Matrix (d) oder mindestens ein reaktives Monomer (a), einen Aktivator (b) und eine polymere Filmbildner-Matrix (d) sowie gegebenenfalls weitere Additive und/oder Hilfsstoffe, wie oben definiert.

Anschließend werden die aufgelösten oder fein verteilten Inhaltsstoffe in einem zweiten Schritt vermischt. Zur Herstellung der Mischung werden übliche Rührgeräte eingesetzt. Gegebenenfalls wird die Lösung zudem erwärmt. Ggf. werden die Inhaltsstoffe gleichzeitig aufgelöst bzw. feinverteilt und vermischt.
Der erste Schritt und der zweite Schritt können auch in einem Schritt erfolgen, die Inhaltsstoffe also gleichzeitig aufgelöst und/oder feinverteilt werden.

Daraufhin wird in einem dritten Schritt ein Trennpapier, ein Trägermaterial oder ein Haftklebstoff mit der Mischung der aufgelösten bzw. fein verteilten Inhaltsstoffe nach Schritt 2 beschichtet. Die Beschichtung erfolgt nach den üblichen Techniken, die im Stand der Technik bekannt sind.

Nach der Beschichtung wird das Lösemittel in einem vierten Schritt durch Abdampfen entfernt.

Gegebenenfalls kann der reaktive Klebefilm in einem weiteren Schritt zu einer Rolle aufgewickelt werden.

Zur Lagerung werden die erfindungsgemäßen, reaktiven Klebefilme mit einem Trennliner oder -papier abgedeckt.

Alternativ werden die erfindungsgemäßen, reaktiven Klebefilme lösungsmittel- und wasserfrei durch Extrusion, Hotmeltdüsenbeschichtung oder Kalandrieren hergestellt.

### Verbundkörper

Zuletzt wird erfindungsgemäß ein Verbundkörper bereitgestellt, der durch das erfindungsgemäße, reaktive Klebesystem, wie oben definiert, verbunden ist.

### Fazit

Das erfindungsgemäße Klebstofffilm-System bietet gegenüber den Systemen, wie sie im Stand der Technik bekannt sind, eine Reihe von Vorteilen.

So kann das Klebstoffilm-System dem Anwender als kompletter Verbund (als vorgefertigtes Klebeband) angeboten werden, und er ist nicht gefordert, zwei zunächst separat vorliegende Bausteine einzusetzen.

Weiterhin ist es möglich - und in vielen Fällen auch vorteilhaft - die Laserbehandlung erst kurz vor der Anwendung oder erst kurz vor der Verklebung durchzuführen, so dass Klebebänder (Streifen, Stanzlinge usw.) auf den Bauteilen angeordnet und die Bauteile gegebenenfalls bereits in ihre schlussendliche Anordnung gebracht werden können; dies insbesondere dann, wenn zumindest eines der Teile für Laserstrahlen durchgängig ist. Solche Vor-Produkte sind dann sogar lagerfähig. Bei den herkömmlichen Systemen, die bereits bei Inkontaktbringung reagieren, ist dies nicht möglich.

Die Aktivierung von Mehrschichtsystemen - also solchen Systemen, die mehr als zwei Klebefilmen (F1 und F2) in wechselnder Abfolge aufweisen - ist vereinfacht, das es möglich ist, den kritischen Kontakt jeweils zunächst durch Trennschichten zu verhindern. Der Laser kann dann zur Aktivierung eine Sublimation mehrerer Trennschichten in der Tiefe erwirken.

## Patentansprüche

1. Verfahren zum Verkleben zweier Oberflächen mittels eines reaktiven Klebstofffilm-Systems umfassend zumindest zwei Klebstoff-Filme (F1 und F2), wobei die Klebstoff-Filme jeweils zumindest eine Reaktivkomponente (R1 und R2) umfassen, wobei die Verklebung durch eine Reaktion bewirkt wird, die die Anwesenheit beider Reaktivkomponenten (R1 und R2) erfordert,
**dadurch gekennzeichnet, dass**
vor der Verklebung zwischen den zur Reaktion miteinander in Kontakt zu bringenden Klebstoff-Filme (F1 und F2) eine für die Reaktivkomponenten (R1 und R2) undurchlässige Trennschicht (T) vorgesehen ist,
und die Trennschicht (T) zur Bewirkung der Verklebung zumindest teilflächig mittels eines Lasers entfernt wird,
so dass die Klebstoff-Filme (F1 und F2) miteinander in unmittelbaren Kontakt kommen und die Reaktion unter Anwesenheit der beiden Reaktivkomponenten (R1 und R2) einsetzt.

2. Verfahren nach Anspruch 1, **dadurch gekennzeichnet, dass**
die Reaktion zur Bewirkung der Verklebung eine solche ist, bei der die Reaktivkomponenten (R1 und R2) miteinander reagieren.

3. Verfahren nach einem der vorangehenden Ansprüche, **dadurch gekennzeichnet, dass** als Laser ein Nd:YAG-Festkörperlaser verwendet wird.

4. Verfahren nach einem der vorangehenden Ansprüche, **dadurch gekennzeichnet, dass** der zweite Klebstoffkomponenten-Film (F2) als Reaktivkomponente (R2) einen Aktivator enthält.

5. Verfahren nach Anspruch 4, **dadurch gekennzeichnet, dass**
der Aktivator einen Mangan(II)-Komplex, Eisen(II)-Komplex oder Kobalt(II)-Komplex, jeweils mit einer Verbindung, ausgewählt aus Porphyrin, Porphyrazin oder Phthalocyanin oder einem Derivat einer dieser Verbindungen, als Ligand umfasst.

6. Verfahren nach einem der vorangehenden Ansprüche, **dadurch gekennzeichnet, dass**
die erste Klebstoff-Komponente (K1) und/oder die zweite Klebstoff-Komponente (K2) ferner eine polymere Filmbildner-Matrix umfasst.

7. Verfahren nach einem der vorangehenden Ansprüche , **dadurch gekennzeichnet**, das
es sich bei der Trennschicht (T) um eine Metallschicht handelt.

8. Verfahren nach Anspruch 7 , **dadurch gekennzeichnet**, das
dass das Metall Aluminium ist.

9. Verfahren nach einem der Ansprüche 1 bis 6 , **dadurch gekennzeichnet**, das
es sich bei der Trennschicht (T) um eine Schicht aus einem oder mehreren Metalloxiden handelt.

10. Verfahren nach Anspruch 9 , **dadurch gekennzeichnet, dass**
die Metalloxidschicht aus Siliziumdioxid (SiO2), Titandioxid (TiO2) oder Zink-Zinn-Oxid (ZnSnO) besteht oder eines oder mehrerer dieser Metalloxide umfasst.

11. Verfahren nach einem der vorangehenden Ansprüche , **dadurch gekennzeichnet**, das
die Trennschicht eine Dicke von 50 bis 2000 nm aufweist.

12. Verfahren nach einem der vorangehenden Ansprüche , **dadurch gekennzeichnet**, das
der erste Klebstoffkomponenten-Film (F1) als Reaktivkomponente (R1) einen Radikalinitiator, ein reaktives Monomer und/oder ein Reaktivharz enthält.

## Claims

1. Method for adhesively bonding two surfaces by means of a reactive adhesive film system comprising at least two adhesive films (F1 and F2), the adhesive films each comprising at least one reactive component (R1 and R2), adhesive bonding being effected by a reaction which requires the presence of both reactive components (R1 and R2),
**characterized in that**,
prior to adhesive bonding, a separating layer (T) which is impermeable to the reactive components (R1 and R2) is provided between the adhesive films (F1 and F2) which are to be brought into contact with one another for the reaction,
and the separating layer (T) is removed at least in part by means of a laser in order to effect adhesive bonding,
so that the adhesive films (F1 and F2) come into direct contact with one another and the reaction begins in the presence of both reactive components (R1 and R2).

2. Method according to claim 1, **characterized in that** the reaction to effect adhesive bonding is a reaction in which the reactive components (R1 and R2) react with one another.

3. Method according to one of the preceding claims, **characterized in that**
there is used as the laser an Nd:YAG solid-state laser.

4. Method according to one of the preceding claims, **characterized in that**
the second adhesive component film (F2) comprises an activator as the reactive component (R2).

5. Method according to Claim 4, **characterized in that** the activator comprises a manganese(II) complex, iron(II) complex or cobalt(II) complex, in each case with a compound selected from porphyrin, porphyrazine or phthalocyanine or a derivative of one of these compounds, as ligand.

6. Method according to one of the preceding claims, **characterized in that**
the first adhesive component (K1) and/or the second adhesive component (K2) further comprises a polymeric film former matrix.

7. Method according to one of the preceding claims, **characterized in that**
the separating layer (T) is a metal layer.

8. Method according to Claim 7, **characterized in that** the metal is aluminium.

9. Method according to one of Claims 1 to 6, **characterized in that**
the separating layer (T) is a layer of one or more metal oxides.

10. Method according to Claim 9, **characterized in that** the metal oxide layer consists of silicon dioxide (SiO₂), titanium dioxide (TiO₂) or zinc-tin oxide (ZnSnO) or comprises one or more of these metal oxides.

11. Method according to one of the preceding claims, **characterized in that**
the separating layer has a thickness of from 50 to 2000 nm.

12. Method according to one of the preceding claims, **characterized in that**
the first adhesive component film (F1) comprises a radical initiator, a reactive monomer and/or a reactive resin as the reactive component (R1).

## Revendications

1. Procédé pour faire adhérer deux surfaces au moyen d'un système réactif de films adhésifs comprenant au moins deux films adhésifs (F1 et F2), les films adhésifs comprenant à chaque fois au moins un composant réactif (R1 et R2), le collage étant provoqué par une réaction qui exige la présence des deux composants réactifs (R1 et R2), **caractérisé en ce qu'**avant le collage, une couche de séparation (T) imperméable pour les composants réactifs (R1 et R2) est disposée entre les films adhésifs (F1 et F2) à mettre en contact l'un avec l'autre pour la réaction et la couche de séparation (T) est éliminée sur une surface au moins partielle au moyen d'un laser pour provoquer le collage, de telle sorte que les films adhésifs (F1 et F2) entrent en contact direct l'un avec l'autre et que la réaction démarre en présence des deux composants réactifs (R1 et R2).

2. Procédé selon revendication 1, **caractérisé en ce que** la réaction pour provoquer le collage est une réaction lors de laquelle les composants réactifs (R1 et R2) réagissent l'un avec l'autre.

3. Procédé selon l'une quelconque des revendications précédentes, **caractérisé en ce qu'**on utilise, comme laser, un laser à solides Nd:YAG.

4. Procédé selon l'une quelconque des revendications précédentes, **caractérisé en ce que** le deuxième film de composant adhésif (F2) contient un activateur comme composant réactif (R2).

5. Procédé selon la revendication 4, **caractérisé en ce que** l'activateur comprend un complexe de manganèse (II), un complexe de fer (II) ou un complexe de cobalt (II), à chaque fois avec un composé choisi parmi la porphyrine, la porphyrazine ou la phtalocyanine ou un dérivé d'un de ces composés comme ligand.

6. Procédé selon l'une quelconque des revendications précédentes, **caractérisé en ce que** le premier composant adhésif (K1) et/ou le deuxième composant adhésif (K2) comprend/comprennent en outre une matrice filmogène polymère.

7. Procédé selon l'une quelconque des revendications précédentes, **caractérisé en ce qu'**il s'agit, pour la couche de séparation (T), d'une couche métallique.

8. Procédé selon la revendication 7, **caractérisé en ce que** le métal est de l'aluminium.

9. Procédé selon l'une quelconque des revendications 1 à 6, **caractérisé en ce qu'**il s'agit, pour la couche de séparation (T), d'une couche d'un ou de plusieurs oxydes métalliques.

10. Procédé selon la revendication 9, **caractérisé en ce que** la couche d'oxyde métallique est constituée par du dioxyde de silicium (SiO₂), du dioxyde de titane (TiO₂) ou de l'oxyde de zinc et d'étain (ZnSnO) ou comprend un ou plusieurs de ces oxydes métalliques.

11. Procédé selon l'une quelconque des revendications précédentes, **caractérisé en ce que** la couche de séparation présente une épaisseur de 50 à 2000 nm.

12. Procédé selon l'une quelconque des revendications précédentes, **caractérisé en ce que** le premier film de composant adhésif (F1) contient, comme composant réactif (R1), un initiateur de radicaux, un monomère réactif et/ou une résine réactive.
